# EUROPÄISCHE PATENTSCHRIFT

(11) **EP 1 309 430 B1**
(45) Veröffentlichungstag und Bekanntmachung des Hinweises auf die Patenterteilung: **10.01.2007**
(21) Anmeldenummer: 01957672.7
(22) Anmeldetag: 13.08.2001
(51) Int. Cl.: B26F 1/14, B42B 5/10, B23P 15/40

(54) **SCHNEIDMESSER FÜR EINE STANZMASCHINE, VERFAHREN ZU DESSEN HERSTELLUNG UND STANZMASCHINE**
CUTTING TOOL FOR A PUNCHING MACHINE, METHOD FOR PRODUCING SAID CUTTING TOOL AND PUNCHING MACHINE
PERFORATEUR POUR UNE MACHINE A PERFORER, SON PROCEDE DE PRODUCTION ET MACHINE A PERFORER

(30) Priorität: 14.08.2000 CH 157600
(43) Veröffentlichungstag der Anmeldung: 14.05.2003
(73) Patentinhaber: 3T Supplies AG, 8834 Schindellegi (CH)
(72) Erfinder: HILD, Horst, 65333 Mainhausen (DE)
(74) Vertreter: Liebetanz, Michael
(86) Internationale Anmeldenummer: PCT/CH2001/000495
(87) Internationale Veröffentlichungsnummer: WO 2002/014034

(56) Entgegenhaltungen:
- WO-A-93/24289
- DE-U1- 29 918 176

## Beschreibung

Die Erfindung betrifft ein Schneidmesser für eine Stanzmaschine mit einem Stanzkörper, an dem eine Vielzahl von parallel zueinander angeordneten Stanzmesserelementen vorgesehen sind und der an der den Stanzmesserelementen gegenüberliegenden Seite über einen Rechen zum Aufspreizen eines Binderückens verfügt, nach dem Oberbegriff des Anspruchs 1.

Ein solches Stanzmesser ist aus der DE 299 18 176 U1 bekannt. Dabei wird auf der Schiene der Stanzmesser ein im Querschnitt L-förmiges Element befestigt, das über einen Rechen verfügt.

Aus der US 3,255,949 sind Schneidelemente bekannt, die in zwei Schichten teilweise übereinanderliegen. Damit soll das Schnittergebnis verbessert werden.

Ein weiteres Stanzmesser ist aus der WO 93/24289 bekannt. Dabei sind gruppenweise die Längen der Stanzelemente unterschiedlich lang vorgesehen, so dass jeweils nur eine beschränkte Anzahl von Stanzelementen gleichzeitig durch eine zu stanzende Unterlage, in der Regel eine Anzahl von Blättern, hindurchzugehen hat.

Diese Stanzmesser arbeiten zufriedenstellend. Von Nachteil ist jedoch ihr hoher Preis, da die erforderlichen Stanzdicken von z.B. 3 Millimeter Feinstanzmechanikmaschinen erfordern, die eine Druckkraft von beispielsweise 800 Tonnen erzeugen können müssen. Dies ist ein preistreibender Faktor für die bei der Herstellung einzusetzenden Stanzmaschinen.

Ein weiterer Nachteil der Stanzmaschine gemäss dem Stand der Technik liegt in der Vielzahl der Teile einer ein solches Stanzmesser einsetzenden Stanzmaschine, wobei dabei insbesondere auch immer ein Rechen zusätzlich vorzusehen ist.

Ausgehend von diesem Stand der Technik liegt der Erfindung die Aufgabe zugrunde, ein Stanzmesser der eingangs genannten Art anzugeben, welches erheblich kostengünstiger herstellbar ist und zudem in einer Maschine aus weniger Teilen einsetzbar ist.

Diese Aufgabe wird erfindungsgemäss für ein Stanzmesser mit den Merkmalen des Anspruchs 1 gelöst.

Ein Verfahren zur Herstellung des Stanzmessers mit den Merkmalen des Anspruchs 4 verfügt über die Merkmale des Ausstanzens von im wesentlichen länglichen Öffnungen symmetrisch um eine Achse aus einem Blechblatt, wobei die länglichen Öffnungen jeweils parallel zueinander angeordnet sind, und des Faltens des Blechblattes um die besagte Achse.

Bei einem vorteilhaften Verfahren zur Herstellung eines Stanzmessers wird der Schritt des Abschneidens von Abschnitten an der Falzlinie zur Erzeugung einer gewünschten Schneidkontur hinzugefügt.

Eine vorteilhafte Stanzvorrichtung mit einem Stanzmesser gemäss der Erfindung verfügt dann lediglich über vier Teile, wobei diese alle aus lediglich maximal 1,5 Millimeter starkem Blech hergestellt sind.

Die Erfindung wird nun im Detail anhand der beigefügten Ausführungsbeispiele näher beschrieben. Es zeigen:
- Fig. 1: ein erfindungsgemässes Stanzmesser,
- Fig. 2: eine Stanzmaschine mit einem Stanzmesser nach Fig. 1 und mit einem gestanztem Produkt,
- Fig. 3: eine teilweise geschnittene perspektivische Ansicht dieser Maschine nach Fig. 2, und
- Fig. 4: die Spitze eines Stanzelementes bei einem Stanzmesser gemäss einem Ausführungsbeispiel der Erfindung.

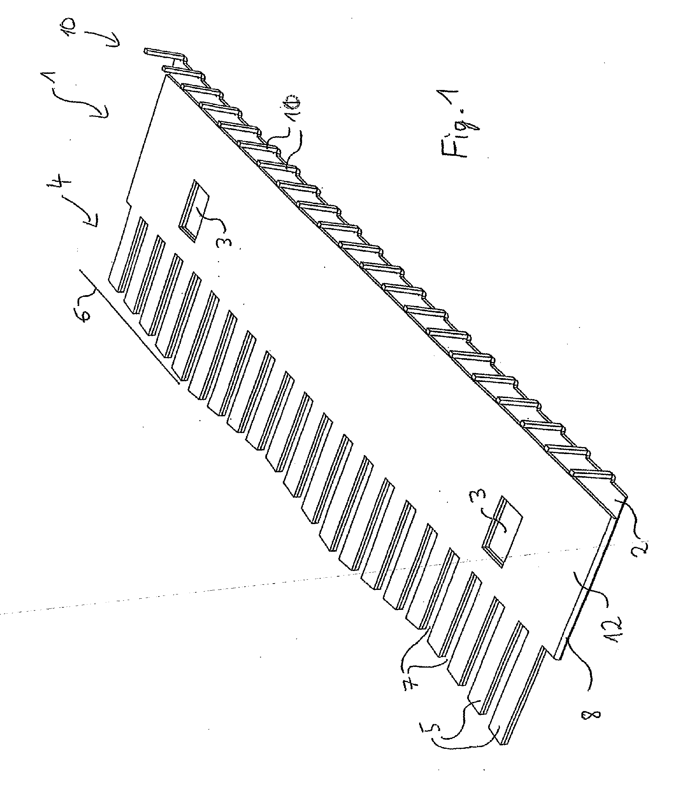

Die Fig. 1 zeigt das erfindungsgemässe Stanzmesser 1. Dieses besteht aus einer unteren Blechplatte 2 und einer oberen Blechplatte 12, die im wesentlichen kongruent übereinander liegen. In diesen Platten 2 und 12 sind zwei Ausnehmungen 3 eingestanzt, die zum späteren Bewegen des Stanzmessers 1 vorgesehen sind. Im Stanzmesserbereich 4 sind eine Vielzahl von parallelen Stanzmesserelementen 5 dargestellt, wobei die Stanzmesserelemente 5 jeweils in Bezug zu einer Achse 6 wellenförmig abgeschnitten sind, so dass nicht jeweils alle Stanzmesserelemente 5 gleichzeitig durch ein zu stanzendes Papier hindurchstossen. Die Stanzmesserelemente 5 sind ansonsten im Querschnitt länglich und insbesondere rechteckig. Somit sind zwischen zwei Stanzmesserelementen 5 jeweils U-förmige Stanzausnehmungen 7 angeordnet. In anderen Ausgestaltungen können die Stanzmesserelemente 5 und Stanzausnehmungen 7 auch mit nicht parallel zueinander stehenden Seitenkanten aufgebaut sein, dann verjüngen sich die Stanzmesserelemente 5 zum Stanzkörper 8 hin und/oder sind gebogen. An dem den Stanzmesserelementen 5 gegenüberliegenden Ende des Stanzkörpers 8 ist ein Kamm 10 mit einer Vielzahl von Zinken 11 vorgesehen, die jeweils rechtwinklig von der Platte 8 abstehen. Der Abstand der Zinken 11 voneinander entspricht dem Abstand der Stanzmesserelemente 5 voneinander. Die Zinken 11 sind vorzugsweise aus dem unteren Bodenblech 2 herausgestanzt und anschliessend um den Winkel von 90° nach oben gebogen worden. Natürlich können die Zinken 11 auch aus dem oberen Bodenblech 12 gestanzt sein.

Der Vorteil des Stanzmessers 1 gemäss der Erfindung liegt insbesondere darin, dass die Zwischenräume 7 zwischen den Stanzmesserelementen 5 bei "aufgeklapptem" Blech herausgestanzt werden, d.h. beim Ausführungsbeispiel nach Fig. 1 sind rechteckige längliche Ausstanzungen symmetrisch zur Achse 6 des ursprünglichen Bleches ausgestanzt worden. Dabei kann im gleichen Arbeitsschritt der Rechen 10 mit den Zinken 11 ausgestanzt werden. Bei einer Dicke von 1,5 Millimeter sind übliche Stanzwerkzeuge mit Gewichtsdrücken von 300 Tonnen einsetzbar. Somit wird kein Aufwand hinsichtlich komplexer Stanzwerkzeuge notwendig, die bei Blechdicken von 3 Millimetern einzusetzen ist.

Es ist vorteilhaft, ein verzinktes Blech einzusetzen, da dann beim Schneiden die Zinkschicht mit dem Schneidmesser an den abgeschnittenen Seitenkanten heruntergezogen wird und diese Schneidkanten somit versiegelt werden. Diese Versiegelung bleibt bei einem Übereinanderlegen der beiden Blechschichten 2 und 12 durch Faltung erhalten.

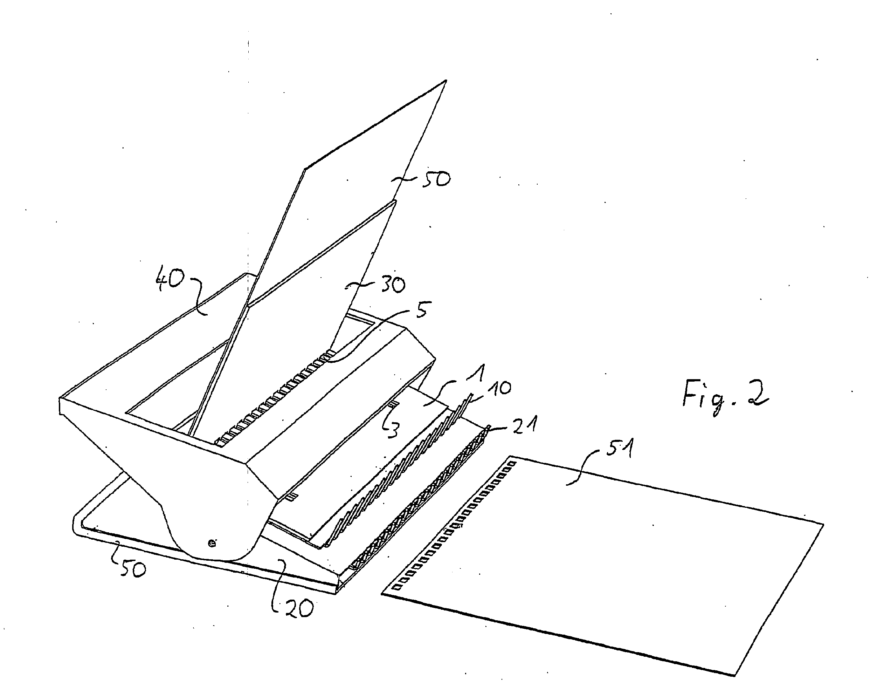

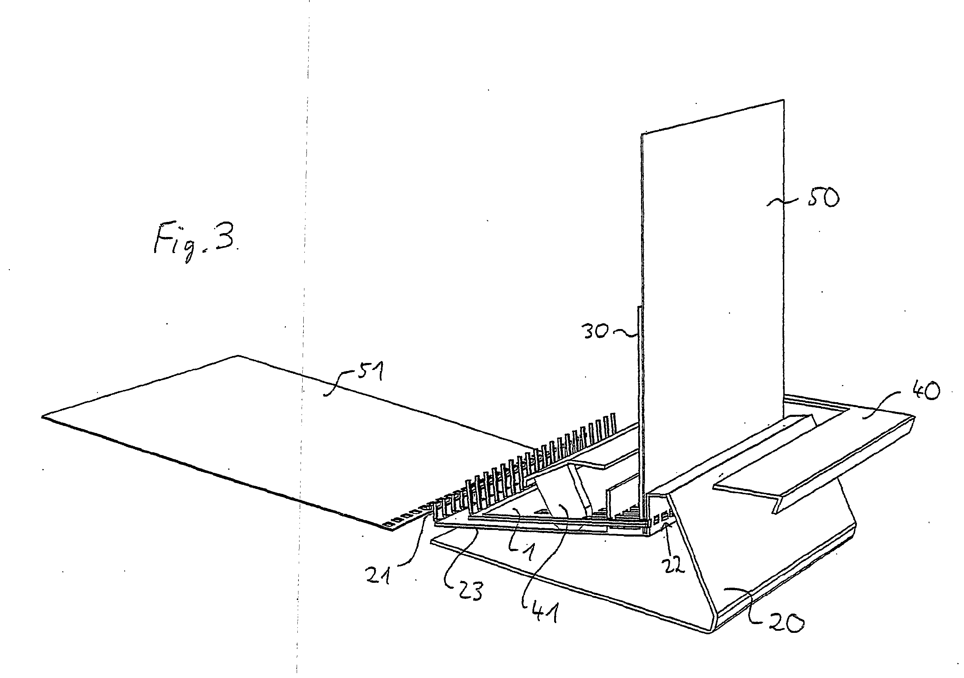

Die Fig. 2 zeigt eine Stanzmaschine, bei der das Stanzmesser 1 nach Fig. 1 vorteilhaft eingesetzt werden kann. Das Stanzmesser 1 mit dem Rechen 10 liegt auf einem Grundkörper 20 auf, der trapezoid ausgestaltet ist. Der Grundkörper 20 verfügt an seinem verjüngten Ende über einen Kamm 21, der Zinken aufweist, die mit den Zinken 11 des Rechens 10 zusammenwirken. Mit dem Bezugszeichen 30 ist eine Papierstütze mit integriertem Abstreifer und Messerführung bezeichnet, die besser in der Fig. 3 zu erkennen sein wird. Schliesslich ist ein einziger Hebel 40 vorgesehen, der gleichzeitig den Antrieb zum Stanzen und Binden bildet. An dem Hebel 40 sind Steuerzapfen vorgesehen, die in die Ausnehmungen 3 des Stanzmessers 1 eingreifen und so dieses Stanzmesser 1 mit den Stanzmesserelementen 5 zum Stanzen durch die Papierstütze 30 und durch das Papier 50 hindurch getrieben wird. Gleichzeitig besteht damit für bereits gestanztes Papier 51 die Möglichkeit, dieses mit zwischen Rechen 10 und Kamm 21 eingelegten Binderücken zu binden. Somit ist in sehr vorteilhafter Weise eine sehr einfache Maschine aufgebaut, die lediglich aus vier Einzelteilen besteht, dem Stanzmesser 1, dem Grundkörper 20, der Papierstütze und Messerführung 30 sowie dem Hebel 40. Vorteilhafterweise ist unter dem Körper 20 ein Abfallbehälter 50 befestigt, d.h. ein Boden, der die in den Innenraum des Grundgestell 20 fallenden Papierreste auffängt. Die vier Körper können aus Blech und insbesondere aus dem gleichen Blechmaterial hergestellt sein, Grundkörper 20 oder Messerführung 30 oder Hebel 40 können aber auch aus Kunststoff und insbesondere im Spritzguss hergestellt sein.

Die Fig. 3 schliesslich zeigt eine teilweise geschnittene Ansicht der Stanzmaschine nach Fig. 2. Gleiche Merkmale sind jeweils mit gleichen Bezugszeichen versehen. Es ist das trapezoid ausgeformte Grundgestell 20 mit Matrize 22 zu erkennen, durch die die Stanzmesserelemente 5 hindurch stossen. An dem Hebel 40 ist das Eingreifelement 41 zu erkennen, mit dem das Stanzmesser 1 auf der Oberfläche 23 des Grundgestells 20 in Bezug auf den Kamm 21 verfahrbar ist.

Die Papierstütze 30 ist beispielsweise U-förmig und verfügt über zwei Lochreihen, die mit der Matrize 22 zusammenwirken. Dabei bildet die Papierstütze 30 gleichzeitig den intergrierten Abstreifer sowie eine Messerführung.

Vorteilhafterweise bestehen die Teile jeweils aus verzinktem Blech und sind somit sehr einfach zu bearbeiten. Durch die geringe Blechdicke von nur 1,5 Millimeter sind einfache Stanzwerkzeuge einsetzbar. Um die für die Lochbildung notwendige Dicke der Stanzmesserelemente 5 von beispielsweise 3 Millimeter zu erreichen, wird das Stanzmesser 1 durch Falten eines vorgestanzten Bleches erzeugt und nach dem Falten lediglich nachbearbeitet.

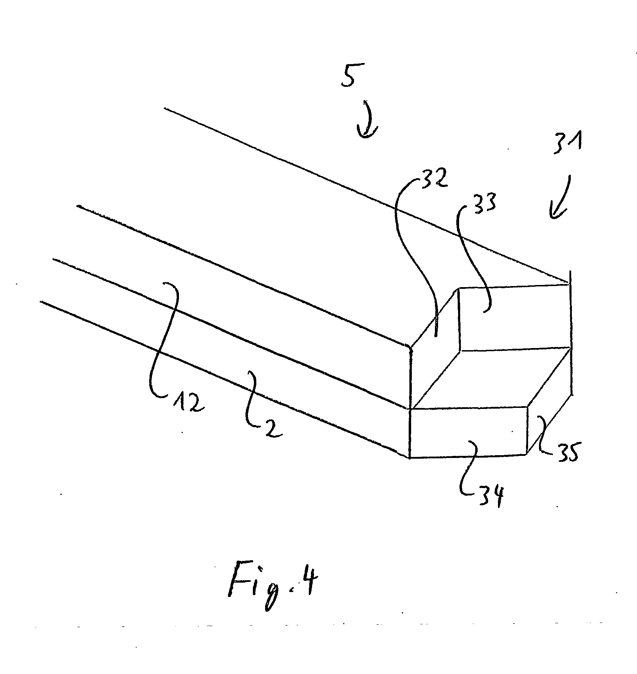

Die Fig. 4 zeigt ein vorteilhaftes Ausführungsbeispiel der Spitze eines Stanzmessers 5. Dieses besteht, wie bei der Fig. 1 aus zwei Schichten 2, 12 eines Blechs, wobei vor dem Falten des Bleches, dieses auch im Spitzenbereich 31 jedes Stanzmessers 5 mit einer Stanzkontur versehen worden ist. Im in der Fig. 4 dargestellten Ausführungsbeispiel sind dies zwei Seiten 32 und 33 bzw. 34 und 35 eines gleichschenkligen Dreiecks, wobei die dritte Seite parallel zur Achse 6 steht und die Falzachse bildet. Damit ist es sehr einfach möglich, insbesondere mit dem gleichen Stanzschritt, eine dreidimensionale Schneide zu erzeugen. Dies gestattet geringere Schnittkräfte, wenn jedes Stanzmesser 5 durch das zu lochende Gut hindurchtritt. Zusätzlich ist auch die Vorgabe einer Kontur entsprechend dem Stanzmesser 5 nach Fig. 1 möglich, jedoch keine Bedingung.

## Patentansprüche

1. Schneidmesser (1) für eine Stanzmaschine mit einem Stanzkörper (8), an dem eine Vielzahl von parallel zueinander angeordneten Stanzmesserelementen (5) vorgesehen sind und der an der den Stanzmesserelementen (5) gegenüberliegenden Seite über einen Rechen (10) zum Aufspreizen eines Binderückens verfügt, wobei der Stanzkörper (8) aus einem doppellagigen Blech (2, 12) besteht, **dadurch gekennzeichnet dass** an dem den Stanzmesserelementen (5) gegenüberliegenden Ende von einer der beiden Blechlagen (2, 12) der besagte Rechen (10) einstückig aus der besagten Blechlage (2, 12) abragt.

2. Schneidmesser nach Anspruch 1, **dadurch gekennzeichnet, dass** jede Blechlage (2, 12) einzeln verzinkt ist.

3. Schneidmesser nach Anspruch 1 oder Anspruch 2, **dadurch gekennzeichnet, dass** jedes Stanzmesserelement (5) komplementäre Schneidspitzen (31) aufweist, die jeweils eine dreidimenionale Schneidkontur (32, 33; 34, 35) bilden.

4. Verfahren zur Herstellung des Stanzmessers (1) nach einem der vorstehenden Ansprüche, **dadurch gekennzeichnet, dass** es die Schritte umfasst
- des Ausstanzens von im wesentlichen länglichen Öffnungen (7) symmetrisch um eine Achse (6) aus einem Blechblatt (2 und 12),
wobei die länglichen Öffnungen (7) jeweils parallel zueinander angeordnet sind, und
- des Faltens des Blechblattes (2, 12) um die besagte Achse (6) zur Bildung von doppellagigen Stanzmesserelementen (5).

5. Verfahren nach Anspruch 4, **dadurch gekennzeichnet, dass** zugleich mit oder zeitnah zu dem Ausstanzen der Öffnungen (7) an einer der beiden Blattenden ein Zinkenkamm (11) ausgestanzt wird, der danach zeitgleich mit oder zeitnah zu dem Falzschritt um im wesentlichen 90 Grad umgebogen wird.

6. Verfahren nach Anspruch 4 oder Anspruch 5, **dadurch gekennzeichnet, dass** vor dem Falten des Blechblattes (2, 12) zeitgleich mit oder zeitnah vor dem Stanzschritt die Spitzes (31) der zu stanzenden Stanzmesserelementen (5) mit einer Kontur (32, 33; 34, 35) gestanzt werden, so dass jedes Stanzmesserelement (5) eine dreidimensionale Schneidkontur erhält.

7. Stanzmaschine mit einem Stanzmesser (1) nach einem der Ansprüche 1 bis 3, **dadurch gekennzeichnet, dass** das Stanzmesser (1) auf einem Grundgestell (20) verschieblich aufliegt, welches ebenfalls über einen mit dem Rechen (10) zusammenwirkenden Kamm (21) verfügt, und dass das Verschieben des Stanzmessers (1) mit Hilfe eines Hebels (40) bewirkbar ist, mit dem gleichzeitig die Stanzmesserelemente (5) gegen einen Papierhalter (30), durch einlegbares zu stanzendes Material (51) und eine in dem Grundgestell (20) vorgesehene Matrize (22) hindurchführbar sind.

8. Stanzmaschine nach Anspruch 7, **dadurch gekennzeichnet, dass** Grundgestell (20), Hebel (40), Papierhalter (30) und Stanzmesser (1) aus maximal 1,5 Millimeter starkem Blech hergestellt sind.

## Claims

1. A cutting blade (1) for a punching machine, having a punching body (8) on which a multiplicity of punching blade elements (5) arranged parallel to one another are provided, having a rake (10) on the side opposite the punching blade elements (5) for expanding a binder back, wherein the punching body (8) consists of a double-layered metal sheet (2, 12), **characterized in that** on the side opposite the punching blade elements (5) of one of the two metal sheet layers (2, 12) said rake (10) extends in one piece from said metal sheet layers (2, 12).

2. The cutting blade as claimed in claim 1, **characterized in that** each sheet-metal layer (2, 12) is individually galvanized.

3. The cutting blade as claimed in claim 1 or claim 2, **characterized in that** each punching blade element (5) has complementary cutting tips (31) which each form a three-dimensional cutting contour (32, 33; 34, 35).

4. A method of producing a punching blade (1) as claimed in one of the preceding claims, **characterized in that** it comprises the steps of
- punching out essentially elongated openings (7) symmetrically about an axis (6) from a sheet-metal plate (2 and 12), the elongated openings (7) in each case being arranged parallel to one another, and
- folding the sheet-metal plate (2, 12) about said axis (6) for forming double-layered punching blade elements (5).

5. The method as claimed in claim 4, **characterized in that**, at the same time as or nearly at the same time as the punching-out of the openings (7), a toothed comb (11) is punched out on one of the two plate ends, this toothed comb (11) being bent by essentially 90 degrees at the same time as or nearly at the same time as the folding step.

6. The method as claimed in claim 4 or claim 5,
**characterized in that**, before the folding of the sheet-metal plate (2, 12), the tip (31) of the punching blade elements (5) to be punched, at the same time as or just before the punching step, are punched with a contour (32, 33; 34, 35), so that each punching blade element (5) is given a three-dimensional cutting contour.

7. A punching machine having a punching blade (1) according to one of claims 1 to 3, **characterized in that** the punching blade (1) rests on a base frame (20) in a displaceable manner, this base frame (20) likewise having a comb (21) interacting with the rake (10), and **in that** the punching blade (1) can be displaced by means of a lever (40) with which the punching blade elements (5) can be directed simultaneously against a paper holder (30), through loadable material (51) to be punched and a die (22) provided in the base frame (20).

8. The punching machine as claimed in claim 7, **characterized in that** the base frame (20), lever (40), paper holder (30) and punching blade (1) are produced from metal sheet which is at most 1.5 millimeters thick.

## Revendications

1. Perforateur (1) pour une machine à perforer, avec un corps perforant (8) sur lequel on a prévu une pluralité d'éléments emporte-pièce (5) disposés en parallèle et qui sur le côté opposé aux éléments emporte-pièce (5) dispose d'un râteau (10) pour écarter une reliure, le corps perforant (8) consistant en une double tôle (2, 12), **caractérisé en ce que** sur l'extrémité opposée aux éléments emporte-pièce (5) de l'une des deux couches de tôle (2, 12), le râteau (10) saillit en monobloc hors de ladite couche de tôle (2, 12).

2. Perforateur selon la revendication 1, **caractérisé en ce que** chaque couche de tôle (2, 12) est zinguée individuellement.

3. Perforateur selon la revendication 1 ou la revendication 2, **caractérisé en ce que** chaque élément emporte-pièce (5) comporte des pointes perforantes (31) complémentaires, qui forment chacune un contour de perforation tridimensionnel (32, 33; 34, 35).

4. Procédé de fabrication du perforateur (1) selon l'une quelconque des revendications précédentes, **caractérisé en ce qu'**il comporte les étapes
- découpage d'orifices (7) sensiblement oblongs, de façon symétrique autour d'un axe (6), dans une feuille de tôle (2 et 12), les orifices oblongs (7) étant respectivement disposés en parallèle, et
- pliage de la feuille de tôle (2, 12) autour dudit axe (6), pour former des éléments emporte-pièce (5) bicouches.

5. Procédé selon la revendication 4, **caractérisé en ce que** simultanément ou peu avant ou après le découpage des orifices (7), on découpe sur chacune des extrémités de la feuille un peigne à dents (11) que l'on recourbe ensuite sensiblement à 90 degrés, soit simultanément à l'étape de pliage, ou peu avant ou après celle-ci.

6. Procédé selon la revendication 4 ou la revendication 5, **caractérisé en ce que**, avant le pliage de la feuille de tôle (2, 12) simultanément ou peu avant l'étape de découpage, on découpe les pointes (31) des éléments emporte-pièce (5) à découper avec un contour (32, 33 ; 34, 35) pour donner à chaque élément emporte-pièce (5) un contour de perforation tridimensionnel.

7. Machine à perforer avec un perforateur (1) selon l'une quelconque des revendications 1 à 3, **caractérisée en ce que** le perforateur (1) repose de façon déplaçable sur un support de base (20) qui dispose également d'un peigne (21) coopérant avec le râteau (10) et **en ce que** le déplacement du perforateur (1) peut être assuré à l'aide d'un levier (40) avec lequel on peut également introduire les éléments emporte-pièce (5) contre un support à papier (30), à travers une matière à perforer que l'on peut insérer (51) et une matrice (22) prévue dans le châssis de base (20).

8. Machine à perforer selon la revendication 7,
**caractérisée en ce que** le châssis de base (20), le levier (40), le support à papier (30) et le perforateur (1) sont fabriqués dans une tôle d'une épaisseur maximale de 1,5 millimètre.
